(19) Europäisches Patentamt
European Patent Office
Office européen des brevets

(11) **EP 3 696 539 A1**

(12) **EUROPÄISCHE PATENTANMELDUNG**

(43) Veröffentlichungstag:
**19.08.2020 Patentblatt 2020/34**

(21) Anmeldenummer: **19157400.3**

(22) Anmeldetag: **15.02.2019**

(51) Int Cl.:
**G01N 27/06** (2006.01)  **G01N 27/60** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Evonik Operations GmbH**
**45128 Essen (DE)**

(72) Erfinder:
• **GODDE, Peter**
 **45665 Recklinghausen (DE)**

• **KUPILLAS, Harry**
 **45327 Essen (DE)**
• **KAISER, Marco**
 **45149 Essen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(54) **VORRICHTUNG UND VERFAHREN ZUM MESSEN DER ELEKTRISCHEN LEITFÄHIGKEIT UND/ODER DES ELEKTRISCHEN POTENTIALS EINES AGGRESSIVEN, ZÄHFLÜSSIGEN MEDIUMS UNTER HARSCHEN BEDINGUNGEN**

(57) Die Erfindung betrifft eine Vorrichtung zum Messen der elektrischen Leitfähigkeit und/oder des elektrischen Potentials eines flüssigen Mediums sowie entsprechende Messverfahren. Ziel der Erfindung ist, die Kosten für die Inertisierung einer chemischen Produktionsanlage zu reduzieren, in welcher brennbare, aggressive, elektrisch nicht oder kaum leitfähige, (zäh)flüssige Medien unter harschen Bedingungen gehandhabt werden. Erreicht wird das Ziel mit einer Vorrichtung, welche einen Behälter, eine Sonde und ein Messgerät umfasst. Der Behälter nimmt das flüssiges Medium auf. Die Sonde ragt durch die Behälterwand in den Behälter und kontaktiert das Medium. Die Sonde ist über einen Flansch mit der Behälterwand verbunden, wobei der Flansch mindestens eine Isolierung aufweist, welche die Sonde von der Behälterwand elektrisch isoliert und den Flansch gegen Durchtritt des Mediums dichtet. Das Messgerät gestattet wahlweise das elektrische Potential zwischen der Sonde und der Behälterwand oder die elektrische Leitfähigkeit des Mediums zu messen.

Fig. 5

EP 3 696 539 A1

**Beschreibung**

Die Erfindung betrifft eine Vorrichtung zum Messen der elektrischen Leitfähigkeit und/oder des elektrischen Potentials eines flüssigen Mediums sowie entsprechende Messverfahren.

Die elektrische Leitfähigkeit eines flüssiges Mediums ist insbesondere dann von Interesse, wenn das Medium eine relativ geringe elektrische Leitfähigkeit aufweist und wenn das Medium in Apparaturen oder Behältern bewegt wird: Durch die Bewegung der Flüssigkeitsteilchen werden elektrische Ladungen getrennt, wodurch sich das Medium gegenüber seiner Umgebung elektrostatisch auflädt. Bei elektrisch gut leitfähigen Flüssigkeiten wie beispielsweise Leitungswasser tritt dieser Effekt nicht auf, da die Ladungstrennung sofort innerhalb des Mediums ausgeglichen wird. Aus diesem Grunde sind Alltagsphänomene, die auf elektrostatische Aufladung von Flüssigkeiten beruhen, unbekannt.

Von der elektrostatischen Aufladung eines flüssigen Mediums geht eine erhebliche Gefahr aus, wenn eine zündfähige Atmosphäre anwesend ist. Dies ist beispielsweise dann der Fall, wenn das Medium brennbar und leicht flüchtig ist: In diesem Fall kann es durch Verdampfung und anwesenden Luftsauerstoff eine zündfähige Gasphase ausbilden. Wenn sich die elektrostatische Aufladung dann durch die Gasphase entlädt, entsteht ein Zündfunken, der eine verheerende Explosion auslöst.

Technische Maßnahmen können die Explosionsgefahr weitestgehend ausschließen. Eine umfassende Zusammenstellung der technischen Erfordernisse bietet die TRGS 727:

Ausschuss für Gefahrstoffe der Bundesanstalt für Arbeitsschutz und Arbeitsmedizin (Hrg.): Vermeidung von Zündgefahren infolge elektrostatischer Aufladungen. Technische Regeln für Gefahrstoffe (TRGS) 727. GMBI 2016 S. 256-314 [Nr. 12-17]. url: https://www.baua.de/DE/Angebote/Rechtstexte-und-Technische-Regeln/Regelwerk/TRGS/TRGS-727.html.

Die TRGS 727 hat für Betreiber explosionsgefährdeter Anlagen in Deutschland bindenden Charakter.

Soweit für das Verständnis der vorliegenden Erfindung erforderlich, werden ein paar Aspekte des technischen Explosionsschutz erläutert.

Grundsätzlich bestehen zwei technische Möglichkeiten, die Entzündung entflammbarer Flüssigkeiten durch elektrostatische Entladung zu vermeiden:

1. Beseitigung der zündfähigen Atmosphäre. Dies geschieht meist durch Inertisierung, also der Verdrängung der sauerstoffhaltigen Luft durch ein inertes Gas wie etwa Stickstoff. Ohne Sauerstoff findet keine Verbrennung statt.

2. Begrenzung des elektrischen Potentials. Wenn das elektrische Potential (also der Grad der elektrostatischen Aufladung) hinreichend gering ist, kann es nicht zu spontaner Entladung durch Funkenüberschlag kommen. Entladungsfunken bei Potentialdifferenzen unter 300 V bzw. 100 V sind nicht zündwirksam; vgl. TRGS 727, Seite 109.

Die Begrenzung des elektrischen Potentials erfolgt durch Erdschluss des Mediums (Potentialausgleich). Dies ist selbstverständlich nur dann möglich, wenn das Medium eine hinreichend große elektrische Leitfähigkeit besitzt.

Um sicher zu gehen, dass ein hinreichender Erdschluss beim Umgang mit brennbaren, elektrisch schwach leitenden Flüssigkeiten gewährleistet ist, ist es im industriellen Umfeld üblich, die elektrische Leitfähigkeit des fließfähigen Mediums zu messen.

So ist beispielsweise bei der Betankung von Flugzeugen sicher zu gehen, dass die elektrische Leitfähigkeit des Kerosins stets oberhalb von 300 pS/m (pico Siemens/Meter) liegt; vgl. Abs. [0003] der DE 10 2013 109 217 A1. Aus dieser Offenlegungsschrift ist eine Messsonde bekannt, mit der sich die elektrische Leitfähigkeit eines flüssigen Mediums messen lässt. Diese Messsonde ist offenbar für Treibstoffe bestimmt.

Für Flugtreibstoffe mag die in DE 10 2013 109 217 A1 beschriebene Messsonde gut geeignet sein, jedoch tritt das Problem der Handhabung von nicht leitenden, brennbaren Flüssigkeiten auch in der Chemieindustrie auf. Die dort manipulierten Chemikalien können deutlich aggressiver sein als Kraftstoffe es sind: Insbesondere zähflüssige Reaktionsgemische, welche abrasive, feste Partikel wie beispielsweise Katalysatoren enthalten und/oder unter harschen thermodynamischen Bedingungen gehalten werden, stellen außerordentlich hohe Anforderungen an Apparaturen, die mit dem Medium in Kontakt kommen. Die in DE 10 2013 109 217 A1 beschriebene Messsonde erscheint daher nicht geeignet, die elektrische Leitfähigkeit einer aggressiven Chemikalie mit Feststoffanteil unter hohem Druck und hoher Temperatur zu messen.

Da auf dem Markt keine Messsonden verfügbar sind, welche eine verlässliche Bestimmung der elektrischen Leitfähigkeit eines zähflüssigen, aggressiven Reaktionsgemisches unter harschen Bedingungen ermöglicht, wird die Explosionssicherheit in der industriell chemischen Praxis dadurch gewährleistet, dass die zündfähige Atmosphäre beseitigt wird. Konkret wird ein hoher apparativer Aufwand betrieben, um eine verlässliche Inertisierung sicherzustellen. Insbesondere dann, wenn Zündfunken bei der Handhabung von nicht leitenden, brennbaren Chemikalien nicht auszuschließen sind, ist der Aufwand für die Inertisierung sehr groß. Dadurch werden die Betriebskosten der Chemieanlage erhöht.

Eine weitere Sicherheitsmaßnahme im Umgang mit nicht leitenden, fließenden Medien ist es, die Fließgeschwindigkeit zu begrenzen; vgl. TRGS 727, Seite 23. Wenn die Flüssigkeit nur langsam bewegt wird, kann selbst bei geringer elektrischer Leitfähigkeit noch ein Austausch der elektrischen Ladungen innerhalb der Flüssigkeit erfolgen. Das elektrische Potential kann dadurch begrenzt werden, die Funkengefahr sinkt.

Die Reduktion der Fließgeschwindigkeit wirkt sich jedoch nachteilig auf die Prozessökonomie aus: Das Befüllen und Entleeren von Behältern mit dem nichtleitenden Medium dauert länger. Aber auch, wenn sich das Medium in einem Behälter befindet, ist eine Begrenzung der Fließgeschwindigkeit mit Nachteilen verbunden: Bei der Durchführung chemischer Reaktionen ist es meist erforderlich, das Reaktionsmedium gut zu durchmischen. In der industriellen Praxis sind insbesondere Rührkesselreaktoren verbreitet, bei denen Rührorgane das Reaktionsgemisch kontinuierlich durchrühren. Wenn die Fließgeschwindigkeit aus Sicherheitsgründen reduziert werden muss, bedeutet dies eine langsamere Durchmischung, weniger Turbolenz und damit eine schlechtere Prozessintensität. Dies wirkt sich wiederum negativ auf die laufenden Produktionskosten aus. In der Regel ist es dann wirtschaftlicher, in eine hochwertige Inertisierung zu investieren, als sich eine Begrenzung der Fließgeschwindigkeit aufzuerlegen.

Im Lichte dieses Standes der Technik lag der Erfindung die Aufgabe zu Grunde, die Kosten für die Inertisierung einer chemischen Produktionsanlage zu reduzieren, in welcher brennbare, aggressive, elektrisch nicht oder kaum leitfähige, (zäh)flüssige Medien unter harschen Bedingungen gehandhabt werden. Darüber hinaus soll die Erfindung mehr Freiheiten eröffnen, die Fließgeschwindigkeit des Mediums zu optimieren. Selbstverständlich darf die Sicherheit der Anlage durch die erfindungsgemäßen Maßnahmen nicht beeinträchtigt werden.

Gelöst wird diese Aufgabe durch eine Vorrichtung nach Anspruch 1.

Gegenstand der Erfindung ist mithin eine Vorrichtung, welche drei wesentliche Bauteile umfasst: einen Behälter, eine Sonde und ein Messgerät.

Der Behälter ist dafür bestimmt, ein flüssiges Medium aufzunehmen, wobei der Behälter mindestens eine metallische Behälterwand aufweist, welche bei aufgenommenen Medium mit dem Medium in Kontakt steht.

Die Sonde besteht aus Metall. Sie durchsetzt die Behälterwand dergestalt, dass sie mit einem distalen Ende in den Behälter hineinragt und bei aufgenommenen Medium mit diesem in Kontakt steht, wohingegen ein proximales Ende der Sonde außerhalb des Behälters angeordnet ist. Die Sonde ist über einen Flansch mit der Behälterwand verbunden, wobei der Flansch mindestens eine Isolierung aufweist, welche die Sonde von der Behälterwand elektrisch isoliert und den Flansch gegen Durchtritt des Mediums dichtet.

Das Messgerät ist über Messleitungen mit der Sonde und der Behälterwand verbunden. Es gestattet wahlweise das elektrische Potential zwischen der Sonde und der Behälterwand oder die elektrische Leitfähigkeit des Mediums zu messen. Die Vorrichtung dient insgesamt dazu, die elektrischen Leitfähigkeit und/oder das elektrische Potential des flüssigen Mediums zu messen, welches sich in dem Behälter befindet.

Die Möglichkeit, die elektrische Leitfähigkeit und/oder das elektrische Potential eines flüssigen Mediums messen zu können, eröffnet insbesondere einem industriellen chemischen Produktionsbetrieb enorme Einsparmöglichkeiten:
Zunächst einmal kann die Messung der elektrischen Leitfähigkeit eines Mediums zu dem Ergebnis führen, dass dessen Leitfähigkeit groß genug ist, um einen Potentialausgleich zu gewährleisten. Diese Aussage erscheint auf den ersten Blick trivial, ist es aber in der Praxis nicht, denn beim Bereitstellen von Reaktionsgemischen in Reaktoren kann sich die elektrische Leitfähigkeit des Reaktionsgemisches schlagartig ändern, etwa durch Zugabe von leitfähigen Salzen im Rahmen von Neutralisationsreaktionen. Auch umgekehrt können sich anfangs hinreichend leitfähige Reaktionsmischungen im Zuge der Reaktion chemisch so verändern, dass ihre Leitfähigkeit sinkt. Dann kann es zu unerwünschten Ladungstrennungen kommen.

Dank des äußerst robusten Aufbaus der Messsonde und ihres Einbaus in den Behälter - dazu später mehr - gestattet die erfindungsgemäße Vorrichtung das Messen der elektrischen Leitfähigkeit eines aggressiven Reaktionsgemisches im Reaktionsbehälter während der Reaktion. Dies war mit bisher bekannten Messeinrichtungen nicht möglich.

Zeigt die Messung der elektrischen Leitfähigkeit des flüssigen Mediums, dass diese sehr niedrig ist (weniger als 50 pS/m) und ist das Medium brennbar, so sind nach herrschender Meinung Inertisierungsmaßnahmen notwendig, um bei einem Entladungsfunken keine Explosion zu verursachen.

Überraschenderweise haben aber Messungen des elektrischen Potentials mit Hilfe der gefundenen Vorrichtung zu der Erkenntnis geführt, dass bei manchen Prozessen das Potential des Mediums weit unter 300 V bleibt. Solange es sich bei dem Medium nicht um einen Explosivstoff handelt, ist bei einem Potential unter 300V kein Funkenschlag zu befürchten; vgl. TRGS 727, Seite 109. In Ermangelung geeigneter Messsonden war die Bestimmung des tatsächlichen Potentials früher nicht möglich. Deswegen wurden einige chemische Prozesse bislang unnötigerweise inertisiert oder aber der Aufwand für die Ausfallsicherheit der Inertisierung wurde übertrieben. Mit Hilfe der erfindungsgemäßen Vorrichtung können nun solche Prozesse identifiziert werden, die hinsichtlich des Inertisierungsaufwandes Einsparpotential versprechen.

Ein weiterer Vorteil der Vorrichtung ist auch, dass sie in laufenden Prozessen zur kontinuierlichen Potentialmessung eingesetzt und damit in das Sicherheitskonzept der Anlage integriert werden kann. Dies ist insbesondere bei der Durchführung von chemischen Reaktionen interessant, wenn sich die elektrische Leitfähigkeit des Reaktionsgemisches durch chemische Umwandlung ständig ändert und daher auch das elektrische Potential starken Schwankungen unterworfen ist.

Ein weiterer Vorteil der Erfindung ist Erhöhung der Anlagensicherheit, da als Grundlage für die Sicherheitsbetrachtung keine pauschalen oder theoretischen Annahmen, sondern konkrete Messergebinsse herangezogen werden können.

Erstaunlich an der Erfindung ist, dass ihre Vorteile mit einem sehr geringen Aufwand erreicht werden. Die erfindungsgemäße Vorrichtung umfasst einen Behälter, eine Sonde und ein Messgerät. Der Behälter ist in der Regel schon vorhanden, denn dort wo fluide Medien gehandhabt werden, muss immer ein Behälter vorhanden sein, da sich Fluide ohne Behälter nicht handhaben lassen. An den Behälter werden lediglich drei Kriterien gestellt: Er muss in der Lage sein, das fluide Medium zum Messzeitpunkt aufzunehmen, er muss eine metallische Behälterwand aufweisen, um einen elektrischen Kontakt zu dem aufgenommenen Medium herstellen zu können und er muss die Möglichkeit bieten, die Sonde an der Behälterwand anflanschen zu können. Ein Stahltank oder ein stählender Reaktor genügt. Derartige Apparate sind standardmäßig mit Flanschanschlüssen versehen. Im einfachsten Falle kann auch eine metallische Rohrleitung als Behälter verwendet werden, sofern dieser mit einem Abzweig versehen ist, an dem sich ein Flanschanschluss befindet.

Der Flanschanschluss wird benötigt, um die Sonde daran zu befestigen. Zu diesem Zweck weist die Sonde einen zum Flanschanschluss des Behälters passendes Gegenstück auf. Durch Verbinden des Flanschanschluss des Behälters mit dem Gegenstück der Sonde entsteht eine Flanschverbindung. In die Flanschverbindung wird eine Isolierung eingelegt, die später näher erläutert werden wird.

Die Sonde ist einfachstenfalls ein metallischer Stab, der sich von einem proximalen Ende zu einem distalen Ende erstreckt. Das distale Ende ragt bei montiertem Flansch in den Behälter hinein und kontaktiert dort das Medium. Das proximale Ende liegt außerhalb des Behälters. Die Sonde tritt damit von außen durch den Flansch in den Behälter ein. Da die Sonde metallisch ist, stellt sie eine elektrisch leitende Verbindung zwischen dem Medium im Innern des Behälters und der Außenwelt dar.

Damit die elektrische Leitfähigkeit des Mediums und/oder das elektrische Potential des Mediums gemessen werden kann, darf zwischen der Sonde und dem Behälter kein elektrischer Kontakt bestehen. Um dies zu gewährleisten weist der Flansch eine Isolierung auf, die zwei Funktionen erfüllt: Zunächst dichtet sie den Flansch ab, sodass zwischen der Innenseite des Flansches und der Außenseite des Flansches kein Stoffaustausch möglich ist. Damit verhindert die Isolierung, dass das Medium aus dem Flansch austritt und dass Umgebungsluft in den Behälter eintritt. Mithin erfüllt die Isolierung die Funktion einer Flanschdichtung, welche ohnehin in den meisten Flanschverbindungen eingebaut ist.

Allerdings muss die erfindungsgemäß eingesetzte Isolierung auch elektrisch isolieren, damit es zwischen Sonde und Behälterwand nicht zu einem Kurzschluss kommt. Mithin muss die Isolierung zumindest teilweise aus einem elektrisch nichtleitenden Material wie etwa Kunststoff bestehen.

Um nun das elektrische Potential des Mediums beziehungsweise dessen elektrische Leitfähigkeit messen zu können, wird ein Messgerät benötigt, welches über Messleitungen mit der Behälterwand und der Sonde verbunden ist. Messgeräte zur Bestimmung dieser beiden elektrischen Größen sind am Markt frei erhältlich. Verwendbar ist beispielsweise das Influenz-E-Feldmessgerät vom Typ EFM 231 der Firma Kleinwächter GmbH, 79688 Hausen, Deutschland.

Zur Bestimmung des elektrischen Potentials des Mediums wird die elektrische Spannung zwischen Behälterwand und Sonde gemessen. Somit wird die Potentialdifferenz zwischen Medium und Behälterwand gemessen. Da der Behälter aber in der Praxis geerdet sein wird (elektrisches Potential der Behälterwand Null) entspricht die gemessene Potentialdifferenz dem absoluten Potential des Mediums.

Sofern die Behälterwand geerdet ist, braucht die Messleitung nicht direkt an der Behälterwand angeschlossen zu werden, sondern kann auch mit dem Potentialausgleich der Behälterwand verbunden werden. Der Potentialausgleich der Behälterwand ist in der Regel mit einer geeigneten Erdungslasche versehen, an der sich die Messleitung einfach anklemmen lässt.

Für den Fall, dass das Potential der Behälterwand nicht Null ist, weil der Behälter nicht geerdet ist, wird nicht das absolute Potential des Mediums gemessen. Das ist aber egal, weil es für die Bewertung der Zündsicherheit nicht auf das absolute Potential ankommt, sondern auf die Potentialdifferenz zwischen Behälterwand und Medium, da im Zweifelsfall dort ein Funke überschlägt. Sollte die Behälterwand nicht geerdet sein, muss die Messleitung direkt an der Behälterwand angeschlossen werden.

Anders als das elektrische Potential kann die elektrische Leitfähigkeit nicht direkt gemessen werden. Stattdessen wird eine Prüfspannung zwischen Sonde und Behälterwand angelegt und der durch das Medium fließende Strom gemessen. Über das OHM'sche Gesetz wird der Durchgangswiderstand $R_D$ der Prüfanordnung berechnet und am Messgerät angezeigt. Dieser Gesamtwiderstand setzt sich zusammen aus dem Durchgangswiderstand des Messgerätes und der eingesetzten Kabel (unter Berücksichtigung des Anpressdrucks), dem Durchgangswiderstand der Messsonde und dem Durchgangswiderstand des eingesetzten flüssigen Mediums.

Unter Berücksichtigung des definierten Abstands zwischen Messsonde und Behälterwand (in Meter) und einem durchschnittlichen Leitungsquerschnitt (in $mm^2$) kann der Durchgangswiderstand des Mediums in einen spezifischen Widerstand $\rho$ (in $\Omega mm^2/m$ bzw. $\Omega m$) umgerechnet werden. Der Kehrwert des spezifischen Widerstands ist die elektrische Leitfähigkeit (in pS/m).

Der Abstand zwischen Messsonde und Behälterwand ist praktisch der Abstand der Flanschfläche zum Flanschkragen, was der Stärke der Isolierung bei geschlossener Flanschverbindung entspricht. Der durchschnittliche Leitungsquerschnitt entspricht der in der Flanschebene liegenden Fläche, die das flüssige Medium einnimmt.

Für den Fall, dass die geometrischen Gegebenheiten im Bereich der Messstelle unbekannt sein sollten, lässt sich der spezifische Widerstand auch mit Hilfe einer Prüfflüssigkeit bestimmen: Dafür wird der Behälter mit einer geeigneten Prüfflüssigkeit gefüllt, deren Leitfähigkeit wohlbekannt ist. Eine Auflistung von Leitfähigkeiten diverser Flüssigkeiten bietet Tabelle 17 der TRGS 727. Sodann wird das Messgerät so kalibriert, dass es die zu erwartende Leitfähigkeit anzeigt. Die Prüfflüssigkeit wird gegen das zu messende flüssige Medium ausgetauscht.

Abgesehen von der Sonde und der Isolierung benötigt die Vorrichtung keine Sonderbauteile. Die Sonde umfasst jedoch keine beweglichen Teile und kann aus einfachen Stahlteilen konstruiert sein. Geeignete Flansche können nach DIN EN 1092-1 ausgeführt sein.

An die Gestaltung der Isolation werden keine besonderen Anforderungen gestellt, außer dass sie geeignet sein muss, den Flansch zu dichten. Sofern ein Flansch nach DIN EN 1092-1 eingesetzt wird kann die Isolation eine passende Gestaltung nach DIN EN 1514 aufweisen.

Das Isolationsmaterial kann aber nicht beliebig gewählt werden, da es elektrisch isolierend sein muss. Es eignet sich beispielsweise eine Isolation aus Polyetheretherketon (PEEK), ein Hochleistungskunststoff mit einer geringen elektrischen Leitfähigkeit. Zur Steigerung der Dichtwirkung kann das Polyetheretherketon an den Dichtstellen mit Polytetrafluorethylen (PTFE) beschichtet sein.

Ein weiterer Aspekt der Flanschverbindung ist im Rahmen der Erfindung beachtlich: Normalerweise werden Flansche mit metallischen Bolzen verschraubt. Sofern die Bolzen direkt in die Behälterwand eingeschraubt sind oder anderweitig mit der Behälterwand in elektrischem Kontakt stehen, könnten die Bolzen eine unerwünschte elektrische Verbindung zwischen der Behälterwand und der Sonde bilden. Um dies während der Potentialmessung zu vermeiden, muss zwischen Sonde und Bolzen eine elektrische Isolation vorgesehen sein.

Eine solche elektrische Isolation stellt eine grundlegende Abkehr vom üblichen Regelwerk der Anlagensicherheit dar, nach der möglichst alle Teile einer Anlage an den betrieblichen Potentialausgleich angeschlossen sein sollen.

Insgesamt ist der konstruktive Aufwand, der mit der Bereitstellung einer erfindungsgemäßen Vorrichtung einher geht, überschaubar. Im Lichte der großen Vorteile, welche die Vorrichtung bietet, ist der betriebliche Wert der Erfindung nicht geringzuschätzen.

Im Folgenden werden vorteilhafte Weiterbildungen der Erfindung vorgestellt.

Wie bereits erwähnt, werden Standard-Flanschverbindungen mit Bolzen verschraubt. Um einen elektrischen Kurzschluss über die Bolzen zu vermeiden, ist eine elektrische Isolation gegenüber der Messsonde erforderlich. Zur konkreten Gestaltung einer elektrisch isolierten Flanschverbindung schlägt die Erfindung vor,

a) dass der Flansch gebildet wird von einem an der Sonde befestigten, die Sonde umschließenden Flanschkragen und einer in der Behälterwand ausgebildeten Flanschfläche, wobei Flanschkragen und Flanschfläche korrespondierende Lochkreise aufweisen, durch deren Löcher sich Schraubbolzen erstrecken;

b) dass die Isolierung eine Dichtscheibe umfasst, welche zwischen dem Flanschkragen und der Flanschfläche eingelegt ist, wobei die Dichtscheibe einen korrespondierenden Lochkreis aufweist, durch welchen sich die Schraubbolzen erstrecken,

c) und dass die Isolierung eine Mehrzahl von Hülsen umfasst, welche die Schraubbolzen umschließen und diese gegenüber dem Flanschkragen elektrisch isolieren.

Eine solche Flanschverbindung orientiert sich an der DIN EN 1092-1 (Abmessungen von Flanschkragen, Flanschfläche und Lochkreis) bzw. an der DIN EN 1514 (Geometrie der Isolation). Die Löcher sind allerdings etwas größer auszuführen, damit die Hülsen hineinpassen. Die Hülsen nehmen die Schraubbolzen auf, sodass kein elektrischer Kontakt zwischen Bolzen und den Flanschteilen besteht. Ggf. müssen die Hülsen einen Kragen aufweisen, auf denen der Schraubkopf aufliegt, damit die Auflagefläche der Schraube nicht den Flanschkragen der Sonde kontaktiert. Alternativ kann der Flanschkragen an seiner Auflagefläche zur Schraube hin mit einer Isolierschicht versehen werden, die unabhängig von den Hülsen ist.

Vorzugsweise besteht die Isolierung zumindest teilweise aus Polyetheretherketon (PEEK). Dieser Kunststoff ist nämlich elektrisch nicht leitend und weist zudem eine hohe mechanische Festigkeit sowie thermische und chemische Beständigkeit auf. Eine Isolierung aus PEEK ist daher geeignet, den Behälter gegenüber einem aggressiven Medium bei harschen Bedingungen abzudichten. Polyetheretherketon ist unter anderem erhältlich unter dem Markennamen VESTAKEEP® von Evonik Resource Efficiency GmbH, Essen, Deutschland.

Falls die Dichtwirkung von PEEK nicht ausreichen sollte, kann die Isolierung zusätzlich mit Polytetrafluorethylen (PTFE) beschichtet sein. PTFE dichtet besser als PEEK ab, ist aber mechanisch nicht so stabil. Beide Werkstoffe können optimal eingesetzt werden, wenn die Dichtscheibe einen ringförmigen Kern aus PEEK umfasst, welcher zu seinem Zentrum hin mit einem Wellenprofil und einer darauf aufgebrachten Beschichtung aus PTFE versehen ist. Sofern die Isolierung Hülsen für die Bolzen umfasst, sollten diese aus PEEK hergestellt sein. Eine etwaige Isolierschicht für die Schraubköpfe kann auch aus PEEK bestehen.

Einfachstenfalls wird die Sonde als zylindrischer Stab ausgeführt. Es lässt sich somit einfaches Stabmaterial verwenden. Das Material muss elektrisch leitfähig und beständig gegen das Medium sein. Es empfiehlt sich ein hochlegierter Edelstahl, etwa Werkstoff-Nr. 2.4605. Auch ist der Strömungswiderstand im Behälter gering, wenn es sich um ein Stabmaterial mit zylindrischen Querschnitt handelt. Allerdings ist die Oberfläche einer zylindrischen Sonde vergleichsweise gering, wodurch der Kontakt zu dem Medium erschwert wird. Um diesen Zielkonflikt zu lösen, sieht eine bevorzugte Weiterbildung der Erfindung vor dass die Sonde als zylindrischer Stab ausgeführt ist, welcher an seinem distalen Ende mit einem ebenen Prallblech versehen ist. Das Prallblech vergrößert die Oberfläche der Sonde und damit den elektrischen Kontakt zum Medium. Das Prallblech wird aus Flachmaterial hergestellt. Der Werkstoff des Prallblechs ist derselbe wie der Stab. In der unmittelbaren Umgebung des Prallbleches sollte es zu einer intensiven Ladungstrennung innerhalb der Flüssigkeit kommen. Dies kann durch starke Verwirbelung der Flüssigkeit, hohe Reibung und hohe Scherkräfte hervorgerufen werden. Zu diesem Zwecke sollte das Prallblech quer zu einer etwaigen Strömung des fluiden Mediums ausgerichtet sein. Bei sehr stark zähflüssigen Medien kann die Biegebelastung auf die Messsonde bei einem quer stehenden Prallblech zu groß werden. In dem Fall kann anstelle eines Prallbleches eine Kugel als Ladungssammler an dem distalen Ende der Messsonde angeordnet werden. Die Kugel vergrößert die Kontaktfläche der Sonde ohne ihren Strömungswiderstand unverhältnismäßig zu erhöhen.

Die erfindungsgemäße Vorrichtung spielt ihre Vorteile besonders dort aus, wo das flüssige Medium im Behälter bewegt wird. Eine bevorzugte Weiterbildung der Erfindung sieht demnach vor, dass die Vorrichtung einen Antrieb aufweist, mittels welchem das in den Behälter eingefüllte Medium in Bewegung versetzbar ist. Bei dem Antrieb handelt es sich einfachstenfalls um ein Rührorgan, welches im Behälter angeordnet ist. Alternativ kann es sich bei dem Antrieb um eine außerhalb des Behälters angeordnete Pumpe handeln, welche das flüssige Medium durch den Behälter zirkuliert.

Besonders vorteilhaft lässt sich die Erfindung nutzen, wenn die Ergebnisse der Potentialmessung mit der Vorrichtung dazu verwendet werden, die Strömungsgeschwindigkeit des Mediums in dem Behälter zu steuern: Eine besonders bevorzugte Weiterbildung der Vorrichtung ist daher gekennzeichnet durch eine Steuerung, welcher ein Grenzwert für das elektrische Potential vorgegeben ist und welche über eine Datenleitung mit dem Messgerät dergestalt verbunden ist, dass das gemessene elektrische Potential der Steuerung übermittelbar ist, wobei die Steuerung dafür eingerichtet ist, eine Erhöhung der Geschwindigkeit des Antriebs auszuschließen, sobald das gemessene elektrische Potential den Grenzwert übersteigt.

Mit steigender Antriebsgeschwindigkeit nimmt die elektrostatische Aufladung meist schneller zu als sie sich ausgleichen kann, sodass das Potential steigt. Um einen Potentialaufbau in den gefährlichen Bereich hinein zu verhindern, kann die Antriebsgeschwindigkeit gesenkt werden. Die hier vorgeschlagene Steuerung hilft die Antriebsgeschwindigkeit zu optimieren: Da über die Vorrichtung das tatsächliche Potential ständig überwacht wird, kann die Antriebsgeschwindigkeit solange erhöht werden, bis ein vorbestimmter Grenzwert für das Potential erreicht wird, bei dem Funkenschlag droht, z.B. bei 100 V oder 300 V. Sodann veranlasst die Steuerung den Antrieb die Geschwindigkeit nicht weiter zu erhöhen, dass das Potential nicht weiter zunimmt. Die Optimierung der Antriebsgeschwindigkeit ermöglicht eine Steigerung der Prozessintensität und damit eine bessere Anlageneffizienz.

Die potentialabhängige Steuerung der Antriebsgeschwindigkeit kann somit Entladungsfunken vermeiden. In Systemen, in denen keine Entladungsfunken entstehen, sind die Anforderungen an die Inertisierung geringer.

Grundsätzlich sollte jede Inertisierungseinrichtung in der Lage sein, den Sauerstoffgehalt im Behälter auf einen Wert zu reduzieren, der maximal 75 % der Sauerstoffgrenzkonzentration entspricht. Die Sauerstoffgrenzkonzentration ist der höchster Stoffmengenanteil Sauerstoff in einem Gemisch einer brennbaren Substanz mit Luft- und Inertgas, bei dem noch keine Explosion ausgelöst wird. Die Sauerstoffgrenzkonzentration wird dabei gemäß DIN EN 1839 bei Betriebstemperatur bestimmt.

Die Reduktion des Sauerstoffgehaltes kann beispielsweise mit Spülen und Überlagern mit Stickstoff erfolgen. Ein wesentliches Unterscheidungsmerkmal von Inertisierungseinrichtungen ist jedoch ihr Sicherheits-Integritätslevel. Gemäß DIN EN 61511-1 werden sicherheitsrelevante technische Systeme hinsichtlich ihrer Ausfallwahrscheinlichkeit in unterschiedliche Sicherheits-Integritätslevel (safety integrity level - SIL) unterteilt. Eine Anlage mit einem hohen SIL weist genügend Redundanzen auf, sodass ein Totalausfall der Einrichtung statistisch unwahrscheinlich ist. Eine Anlage mit geringem SIL kann durchaus während ihrer Lebensdauer ausfallen. Einrichtungen mit hohem SIL sind dementsprechend teurer als Einrichtungen, welche dieselbe Aufgabe mit einem niedrigeren Sicherheits-Integritätslevel erfüllen.

Auf dem Gebiet des Explosionsschutzes sind Inertisierungseinrichtungen mit hohem SIL immer dann Pflicht, wenn zündfähige Gemische vorhanden sind und zugleich Funken auftreten können. Da die erfindungsgemäße Vorrichtung mit potentialabhängiger Steuerung der Antriebsgeschwindigkeit Entladungsfunken vermeidet, kann dementsprechend eine Inertisierungseinrichtung mit einem geringeren SIL verwendet werden. Die Potentialmessung mit der Vorrichtung wird mithin ein Teil des Sicherheitskonzeptes der gesamten Anlage. Freilich müssen die Messsonde, das Messgerät und die Steuerung dann auch ein gewisses Sicherheits-Integritätslevel erfüllen, allerdings sind diese Bestandteile verglichen mit einer Inertisierung einfach aufgebaut. Ein höherer SIL lässt sich hier preiswerter realisieren als bei einer Inertisierung.

Einem solchem integrierten Sicherheitskonzept folgend sieht eine Weiterbildung der Vorrichtung es vor, dass der Sicherheits-Integritätslevel einer Inertisierungseinrichtung so gering gewählt ist, dass die Sicherheit des Betriebs der Vorrichtung ausschließlich in Anwesenheit der Steuerung gewährleistet ist. Die Inertisierungseinrichtung muss dafür eingerichtet sein, die Sauerstoffkonzentration in dem Behälter auf einen Wert zu reduzieren, der unter 75% der Sauerstoffgrenzkonzentration liegt. Die Sauerstoffgrenzkonzentration ist gemäß DIN EN 1839 bei Betriebstemperatur zu bestimmen.

Eine geeignete Werkstoffwahl (PEEK, hochlegierter Stahl) vorausgesetzt, ermöglicht der einfache und robuste Aufbau der Sonde das elektrische Potential und/oder die elektrische Leitfähigkeit eines aggressiven und/oder abrasiven, flüssigen Mediums mit niedriger elektrischer Leitfähigkeit unter harschen Bedingungen zu messen.

Die elektrische Leitfähigkeit des flüssigen Mediums ist dann als niedrig zu verstehen, wenn sie maximal 10000 pS/m oder bevorzugt maximal 2000 pS/m oder weiter bevorzugt maximal 50 pS/m oder am meisten bevorzugt maximal 15 pS/m beträgt. Die Einheit pS/m steht dabei für $10^{-12}$ Siemens pro Meter.

Aggressiv ist das Medium dann, wenn es einen pKs-Wert kleiner 0 aufweist. Der pkS-Wert ist der dekadische Logarithmus der Säurekonstante. Eine Säure mit negativem pKs-Wert wird allgemein als sehr stark bezeichnet.

Abrasiv bedeutet, dass das Medium die Apparate mechanisch verschleißt. Dies ist dann der Fall, wenn das Medium einen hohen Anteil an harten, scharfkantigen Feststoffen aufweist. Das Medium stellt dann eine Suspension dar. In der chemischen Industrie werden häufig Suspensionen gehandhabt. Bei den suspendierten Feststoffen handelt es sich meist um heterogene Katalysatoren oder feste Hilfsstoffe. Darüber hinaus können Reaktionsprodukte in fester Form ausfallen. Denkbar sind aber auch feste Reaktionsedukte. Der Feststoffanteil kann zwischen 0.5 Gew.-% und 25 Gew.-% betragen, bezogen auf das Gesamtgewicht des Mediums.

Abhängig von dem Feststoffgehalt ist auch die Viskosität des Mediums. Hochviskose Medien laden sich stärker elektrostatisch auf als leichtflüssige Medien, denn ihre innere Reibung ist höher. Die nach DIN 53019 bestimmte Viskosität des Mediums kann von 50000 mPas bis 150000 mPas betragen. Die Einheit mPas steht für $10^{-3}$ Pascal Sekunden.

Die Viskosität, der pKs-Wert und die elektrische Leitfähigkeit sind bei vielen Medien temperaturabhängig. Soweit dies der Fall ist, bezieht sich die Angabe der temperaturabhängigen Größe auf die Temperatur des Mediums zum Zeitpunkt der Messung mit der Vorrichtung.

Die Temperatur des Mediums kann zwischen 110°C bis 220°C betragen.

Die Druckdifferenz zur Umgebung des Behälters kann von $1*10^5$ Pa bis $40*10^5$ Pa betragen. Die Einheit Pa steht für Pascal.

Hohe Temperaturen gepaart mit hohen Drücken stellen harsche Bedingungen dar.

Das im Behälter eingefüllte, flüssige Medium, welches im Rahmen der vorliegenden Erfindung hinsichtlich Leitfähigkeit und/oder Potential vermessen wird, weist mithin im eingefüllten Zustand, zumindest dort, wo es mit der Behälterwand und der Sonde in Kontakt steht, mindestens eine der folgenden Eigenschaften auf:

i. eine elektrische Leitfähigkeit von maximal 10000 pS/m oder maximal 2000 pS/m oder maximal 50 pS/m oder maximal 15 pS/m;
ii. einen pKs-Wert kleiner 0;
iii. eine Temperatur von 110°C bis 220°C;
iv. eine Druckdifferenz zur Umgebung des Behälters von $1*10^5$ Pa bis $40*10^5$ Pa;
v. einen Feststoffgehalt von 0.5 Gew.-% bis 25 Gew.-%;
vi. eine nach DIN 53019 bestimmte Viskosität von 50000 mPas bis 150000 mPas.

Eine Vorrichtung, befüllt mit einem solchen Medium, ist eine bevorzugte Weiterbildung der Erfindung.

Vorzugsweise weist das Medium mehrere oder alle Eigenschaften i) bis vi) auf. Das Medium kann jede Eigenschaftskombinationen aufweisen, die sich nach den Regeln der Kombinatorik durch die Auswahl von einer oder zwei oder drei oder vier oder fünf oder sechs Eigenschaften aus einer Liste der Eigenschaften i) bis vi) ergibt.

Ein weiterer Gegenstand der Erfindung ist ein Verfahren zum Messen des elektrischen Potentials eines flüssigen Mediums mit den folgenden Schritten:

a) Bereitstellen einer erfindungsgemäßen Vorrichtung;
b) Einfüllen eines flüssigen Mediums in den Behälter, sodass das Medium sowohl mit der Behälterwand als auch mit dem distalen Ende der Sonde in Kontakt steht;
c) Beaufschlagen des Behälters mit Druck und/oder Wärme und/oder Herbeiführen einer chemischen Reaktion innerhalb des Mediums, sodass das Medium mindestens eine der folgenden Eigenschaften aufweist:

◦ eine elektrische Leitfähigkeit von maximal 10000 pS/m oder maximal 2000;
◦ pS/m oder maximal 50 pS/m oder maximal 15 pS/m;
◦ einen pKs-Wert kleiner 0;
◦ eine Temperatur von 110°C bis 220°C;
◦ eine Druckdifferenz zur Umgebung des Behäl-

ters von $1*10^5$ Pa bis $40*10^5$ Pa;
◦ einen Feststoffgehalt von 0.5 Gew.-% bis 25 Gew.-%;
◦ eine nach DIN 53019 bestimmte Viskosität von 50000 mPas bis 150000 mPas;

d) Bewegen des Medium innerhalb des Behälters mit Hilfe des Antriebs, sodass das Medium eine Bewegungsgeschwindigkeit gegenüber der Behälterwand erhält;
e) Messen des elektrischen Potentials zwischen der Sonde und der Behälterwand mit Hilfe des Messgeräts.

Dieses Verfahren entspricht dem bestimmungsgemäßen Einsatz der erfindungsgemäßen Vorrichtung zur Messung des elektrischen Potentials.

Aus den bereits geschilderten Gründen wird die die Bewegungsgeschwindigkeit des Mediums vorzugsweise in Abhängigkeit des gemessenen elektrischen Potentials gewählt.

Insbesondere wird ein Grenzwert für das elektrische Potential festgelegt, und die Bewegungsgeschwindigkeit des Mediums wird begrenzt, wenn das gemessene elektrische Potential den Grenzwert übersteigt. Auf diese Weise wird die Vorrichtung in das Sicherheitskonzept aufgenommen.

Dies ermöglicht eine Absenkung des Sicherheits-Integritätslevels der Inertisierung. Folglich wird das Verfahren vorzugsweise so betrieben, dass - unter der Vorraussetzung, dass die Vorrichtung eine Inertisierungseinrichtung aufweist, mittels welcher der Sauerstoffgehalt im Behälter auf einen Wert unterhalb von 75 % der gemäß DIN EN 1839 bei Betriebstemperatur bestimmten Sauerstoffgrenzkonzentration reduzierbar ist, wobei die Inertisierungseinrichtung dergestalt ausgeführt ist, dass sie einem Sicherheits-Integritätslevel (safety integrity level - SIL) nach DIN EN 61511-1 entspricht - der Sicherheits-Integritätslevel der Inertisierungseinrichtung so gering gewählt ist, dass die Sicherheit des Betriebs der Vorrichtung ausschließlich unter der Maßgabe gewährleistet ist, dass die Bewegungsgeschwindigkeit des Mediums begrenzt wird, wenn das gemessene elektrische Potential den Grenzwert übersteigt.

Ein weiterer Gegenstand der Erfindung ist ein Verfahren zum Messen der elektrischen Leitfähigkeit eines flüssigen Mediums mit den folgenden Schritten:

a) Bereitstellen einer erfindungsgemäßen Vorrichtung;
b) Einfüllen eines flüssigen Mediums in den Behälter, sodass das Medium sowohl mit der Behälterwand als auch mit dem distalen Ende der Sonde in Kontakt steht;
c) Beaufschlagen des Behälters mit Druck und/oder Wärme und/oder Herbeiführen einer chemischen Reaktion innerhalb des Mediums, sodass das Medium mindestens eine der folgenden Eigenschaften

aufweist:

◦ einen $pK_s$-Wert kleiner 0;
◦ eine Temperatur von 110°C bis 220°C;
◦ eine Druckdifferenz zur Umgebung des Behälters von $1*10^5$ Pa bis $40*10^5$ Pa;
◦ einen Feststoffgehalt von 0.5 Gew.-% bis 25 Gew.-%;

d) Beaufschlagen der Sonde mit einer elektrischen Prüfspannung;
e) Messen des elektrischen Widerstands zwischen der Sonde und der Behälterwand;
f) Bestimmen der elektrischen Leitfähigkeit des Mediums aus dem Widerstand sowie aus der Geometrie von Sonde und Behälter.

Dieses Verfahren entspricht dem bestimmungsgemäßen Einsatz der erfindungsgemäßen Vorrichtung zur Messung der elektrischen Leitfähigkeit.

Die Erfindung soll nun anhand eines Ausführungsbeispiels näher erläutert werden. Hier zeigen:

Figur 1:      Sonde, perspektivisch;

Figur 2:      Isolation, Schnittdarstellung;

Figur 3:      Hülse;

Figur 4:      Montage der Sonde;

Figur 5:      Vorrichtung, komplett;

Figur 6:      Bestimmung spezifischer Widerstand.

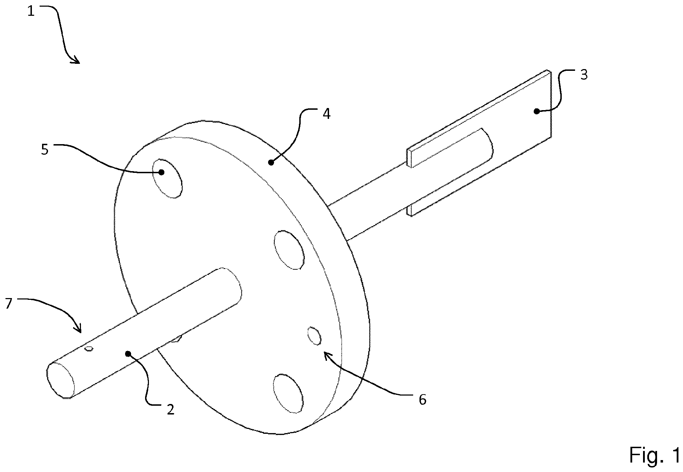

Eine perspektivische Darstellung der Sonde 1 zeigt Figur 1. Die Sonde 1 umfasst einen zylindrischen Stab 2, an dessen distalen Ende eine ebene Prallplatte 3 eingesetzt und festgeschweißt ist. Des Weiteren umfasst die Sonde 1 einen flachen, kreisförmigen Flanschkragen 4, in dessen Zentrum der Stab 2 eingesteckt und festgeschweißt ist. Der Stab 2 durchdringt den Flanschkragen 4. Der Flanschkragen 4 umfasst mehrere Durchgangslöcher 5, die auf einem Lochkreis angeordnet sind. Der Lochkreis entspricht der DIN EN 1092-1, sodass die Sonde 1 mit dem Flanschkragen 4 mit einem entsprechenden Gegenflansch verschraubt werden kann (in Figur 1 nicht dargestellt). Zur Herstellung des Flanschkragens kann daher ein Blindflansch verwendet werden, der mit einer mitten Bohrung für den Stab versehen werden muss. Darüber hinaus weist der Flanschkragen ein Sackloch 6 auf, in welches ein Gewinde eingeschnitten ist. In das Sackloch 6 wird eine Kontaktschraube zur Befestigung eines Federbleches eingeschraubt (in Figur 1 nicht dargestellt). Am proximalen Ende des Stabes 2 ist eine Querbohrung 7 eingebracht, Durchmesser 4 mm. Sie dient als Buchse zum Anschluss einer Messleitung (nicht dargestellt).

Flanschkragen 4, Stab 2 und Prallplatte 3 bestehen aus hochlegiertem Edelstahl mit der Werkstoff-Nr. 2.4605. Dieses Material wird auch im Reaktorbau eingesetzt. Alle Teile der Sonde 1 sind daher gegen viele Chemikalien beständig.

Ein wichtiger Bestandteil der erfindungsgemäßen Vorrichtung ist eine Isolierung. Die Isolierung umfasst bei der hier dargestellten Ausführung mehrere Bauteile, nämlich eine Dichtscheibe 8 und mehrere Hülsen 13.

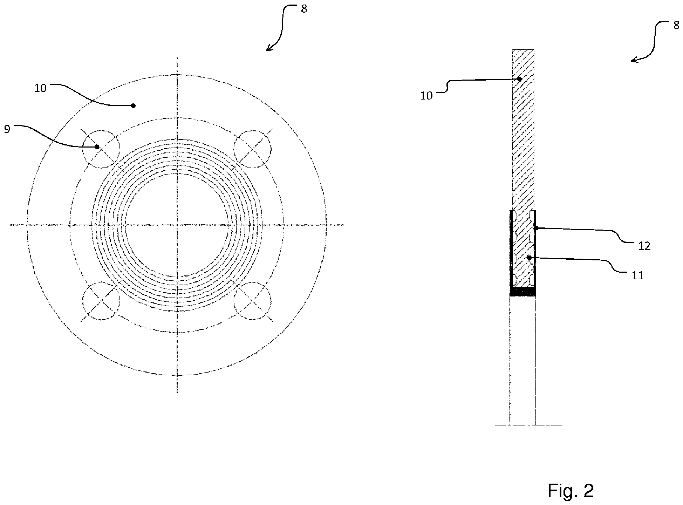

Die Dichtscheibe 8 ist in Figur 2 dargestellt, links in der Draufsicht und rechts in vergrößerter Schnittdarstellung.

Die Dichtscheibe 8 hat die Gestalt einer kreisförmigen flachen, gelochten Scheibe. Ihre Gestaltung orientiert sich an DIN EN 1514. Die Dichtscheibe 8 ist mit einer Mehrzahl von Durchgangslöchern 9 versehen, die auf einem Lochkreis liegen. Der Lochkreis korrespondiert mit dem Lochkreis des Flanschkragens 4.

Die Dichtscheibe 8 besteht aus einer Trägerplatte 10 aus PEEK, welches an seiner Innenseite mit einem Wellenprofil 11 versehen ist. Auf dem Wellenprofil 11 aufgebracht ist eine Beschichtung 12 aus PTFE. Diese bildet die Dichtfläche. Durch die Materialwahl ist die Dichtscheibe 8 chemisch und thermisch sehr beständig.

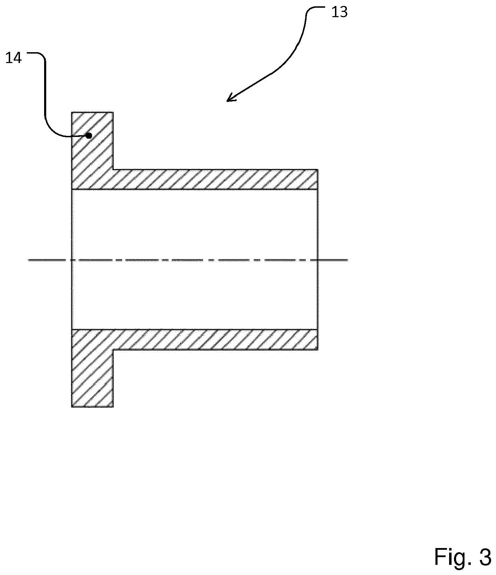

Zu der Isolierung gehören auch eine mit der Anzahl der Durchgangslöcher 5 korrespondierende Anzahl von Hülsen 13. Eine einzelne Hülse 13 ist in Figur 3 dargestellt.

Jede Hülse 13 hat die Gestalt eines dünnwandigen Hohlzylinders. Sie ist mit einem Kragen 14 versehen. Die Hülsen 13 sind aus PEEK gefertigt. Die Hülsen 13 sind dafür bestimmt, in die Durchgangslöcher 5 des Flanschkragens 4 eingesteckt zu werden. Der Kragen 14 liegt auf der proximalen Seite des Flanschkragens auf.

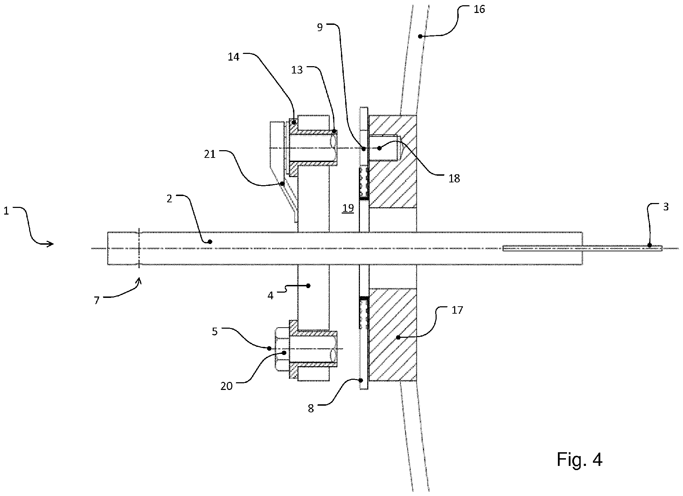

Figur 4 zeigt die Montage der Sonde 1 an einer Behälterwand 16. Die Behälterwand 16 ist mit einer Flanschfläche 17 versehen. Die Flanschfläche 17 ist mit Sacklöchern 18 versehen, die auf einem Lochkreis liegen. Der Lochkreis entspricht den Lochkreisen, auf denen die Durchgangslöcher 5 des Flanschkragens 4 und die Durchgangslöcher 9 der Dichtscheibe 8 liegen. Folglich kann der Flanschkragen 4 mit der Flanschfläche 17 verschraubt werden, wobei zwischen Flanschkragen 4 und Flanschfläche 17 die Dichtscheibe 8 eingelegt wird. So entsteht eine Flanschverbindung 19. Die Dichtscheibe 8 dichtet den die Flanschverbindung 19 ab, sodass kein Stoffaustausch über die Flanschverbindung 19 möglich ist. Außerdem isoliert die Dichtscheibe 8 den Flanschkragen 4 von der Flanschfläche 17 elektrisch. Zum Verschrauben der Flanschverbindung 19 dienen Bolzen 20, die in die Sacklöcher 18 der Flanschfläche 17 eingeschraubt werden. Die Hülsen 13 werden in die Durchgangslöcher der 5 des Flanschkragens 4 eingesteckt und umschließen dort die Bolzen 20. Die Bolzen liegen mit ihrer Auflagefläche auf dem Kragen 14 der Hülsen 13 auf. Dank der Hülsen 13 ist ohne Weiteres keine elektrische Verbindung zwischen der Behälterwand 16 und Sonde 1 über die Bolzen 20 gegeben. Da auch die Dichtscheibe 8 den elektrischen Strom nicht leitet, ist die Flanschverbindung 19 komplett elektrisch isoliert.

Gleichwohl besteht die Möglichkeit, ein Federblech 21 auf der Sonde 1 zu montieren, welches den Kopf eines Bolzen 20 mit dem Flanschkragen kontaktiert. Das Federblech 21 wird mit einer hier nicht dargestellten Schraube befestigt, die in das Sackloch 6 des Flanschkragens 4 eingeschraubt wird. Das Federblech 21 schließt die Hülse 13 des Bolzen 20 kurz, sodass die Sonde über den Bolzen mit der Behälterwand elektrisch verbunden ist. Folglich ist die Sonde 1 an dem Potentialausgleich des Behälters angeschlossen. Sie kann dann nicht zur Messung verwendet werden, ist aber gegen Berührung von außen über den Potentialausgleich des Behälters abgesichert. Das Federblech 21 wird immer dann montiert, wenn mit der Sonde 1 nicht gemessen wird. Sie kann dafür am Behälter verbleiben, die Flanschverbindung 19 braucht daher bei Nichtgebrauch der Vorrichtung 15 nicht geöffnet werden.

Zur Durchführung der Messung wird das Federblech 21 entfernt und eine Messleitung an die Sonde angeschlossen, in dem ein 4mm-Federstecker in die Querbohrung 7 eingesteckt wird. Das andere Ende der Messleitung wird mit einem geeigneten Messgerät verbunden. Eine zweite Messleitung verbindet das Messgerät mit der Behälterwand (nicht dargestellt).

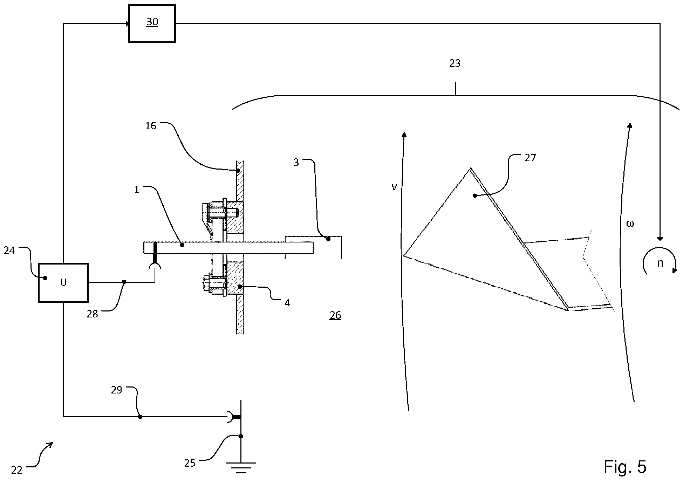

Die komplette Vorrichtung 22 im messbereiten Zustand zeigt Figur 5. Die Vorrichtung 22 umfasst einen Behälter 23, die Sonde 1 und ein Messgerät 24 (schematisch). Bei dem Behälter 23 handelt es sich um einen Reaktor. Die Behälterwand 16 ist aus hochlegiertem Stahl und an den betrieblichen Potentialausgleich 25 angeschlossen Die Sonde 1 ist über die Flanschverbindung 19 mit der Behälterwand 16 verschraubt. Aufgrund der aus Dichtscheibe 8 und Hülsen 13 gebildeten Isolation ist die Sonde 1 von dem Potentialausgleich 25 getrennt.

Der Stab 2 der Sonde 1 durchstößt somit die Behälterwand 16 im Bereich der Flanschverbindung 19 und ragt mit seinem am distalen Ende befindlichen Prallblech in den Behälter 23 hinein.

Im Behälter ist ein flüssiges Medium 26 eingefüllt. Dabei handelt es sich um ein Reaktionsgemisch. Das Medium 26 ist hochviskos, sauer und abrasiv, da es Katalysatorpartikel enthält. Der Behälter 26 ist beheizt und steht unter Druck, um eine chemische Reaktion in dem Medium durchführen zu können. Um die Reaktionsteilnehmer innig zu durchmischen, ist der Behälter mit einem Rührorgan 27 ausgestattet, welches das flüssige Medium umrührt. Das Prallblech 3 steht quer zur Strömung des Mediums 26 im Behälter 23.

Da das Reaktionsgemisch brennbar ist und eine geringe elektrische Leitfähigkeit aufweist, soll mittels der Vorrichtung 22 das elektrische Potential des Mediums 26 gemessen werden. Genauer gesagt, handelt es sich bei dem elektrischen Potential des Mediums 25 um die Potentialdifferenz $P$ zwischen Medium 26 und Behälterwand 16. Da die Behälterwand über den Potentialausgleich 25 geerdet ist, ist das Potential der Behälterwand 16 Null. Die Potentialdifferenz *P* zwischen Behälterwand 16 und Medium entspricht somit dem absoluten Potential des Mediums.

Da das Medium 26 einerseits mit der Behälterwand 16 und anderseits über die Prallplatte 3 mit der Sonde 1 in Kontakt steht, kann zur Bestimmung des Potentials des Mediums 26 die elektrische Spannung zwischen Behälterwand 26 und Sonde 1 gemessen werden.

Dafür wird ein Messgerät, mittels welchem eine Spannung messbar ist, über zwei Messleitung 28, 29 jeweils mit dem Potentialausgleich 25 und der Sonde 1 verbunden. Da die Behälterwand 16 mit dem Potentialausgleich 25 verbunden ist, entspricht der Anschluss der Messleitung 29 an dem Potentialausgleich 25 einem direkten Anschluss an der Behälterwand 16. An dem Messgerät lässt sich eine Spannung U entsprechend der Potentialdifferenz *P* des Mediums 26 gegenüber der Behälterwand 16 ablesen. Da die Behälterwand 16 mit dem Potentialausgleich 25 verbunden ist, entspricht die gemessene Potentialdifferenz dem absoluten Potential.

Übersteigt die Potentialdifferenz *P* einen gewissen Grenzwert, etwa 300V, ist ein Funkenüberschlag zwischen Medium 25 und Behälterwand 16 zu befürchten. In diesem Fall wäre der Behälter 2 mit einer Inertisierungseinrichtung zu versehen, welche den Sauerstoffgehalt im Behälter auf unter 2.7 % Vol reduziert, beispielsweise durch Verdrängen des Luftsauerstoffes mit Stickstoff. 2.7 Vol-% entspricht 75% der Sauerstoffgrenzkonzentration bei Betriebstemperatur des Behälters.

Alternativ oder zusätzlich kann auch die Bewegungsgeschwindigkeit *v* des Mediums 26 gegenüber der Behälterwand 16 reduziert werden, da dies den Aufbau elektrostatischer Spannung zwischen Medium 26 und Behälterwand 16 begrenzt: Bei langsamer Bewegung haben die Elektronen trotz der geringen elektrischen Leitfähigkeit des Mediums 26 genug Zeit, über die Behälterwand 16 auf den Potentialausgleich 25 abzufließen.

Die Bewegungsgeschwindigkeit *v* des Mediums wird über die Drehgeschwindigkeit *ω* des Rührorgans bestimmt. Die Drehgeschwindigkeit *ω* lässt sich über die Drehzahl *n* des Antriebs steuern.

Vorteilhafterweise umfasst die Vorrichtung 22 eine Steuerung 30, welche die Drehzahl *n* des Antriebs des Rührorgans 27 in Abhängigkeit der gemessenen Potentialdifferenz *U* des Mediums 26 steuert. Sofern der Behälter anstelle eines Rührorgans eine Umlaufpumpe aufweist, welche dem Medium im Behälter eine Strömungsgeschwindigkeit gegenüber der Behälterwand aufprägt, beeinflusst die Steuerung den Volumenstrom der Pumpe.

Unabhängig davon, wie das Medium bewegt wird, veranlasst die Steuerung 30 vorteilhafterweise eine Begrenzung der Bewegungsgeschwindigkeit v des Mediums, wenn die Potentialdifferenz *U* einen vorgegebenen Grenzwert übersteigt. Der Grenzwert wird in Ansehung der Explosionsfreudigkeit des Mediums gewählt.

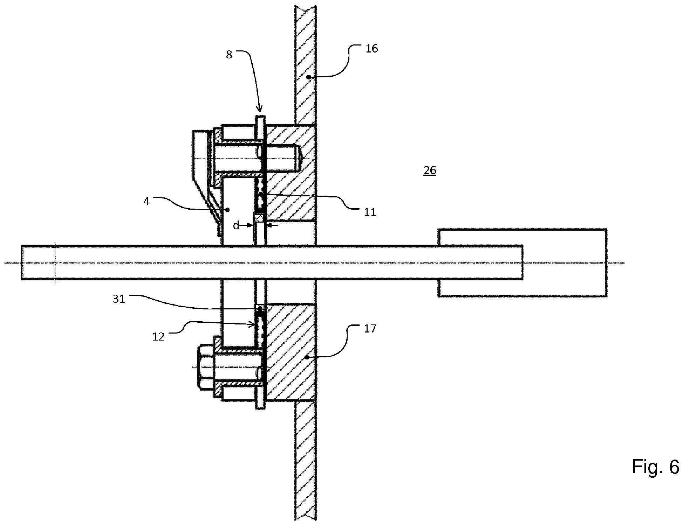

Der Figur 6 ist zu entnehmen, wie aus dem Durchgangswiderstand des Mediums 26 der spezifische Widerstand des Mediums 26 berechnet werden kann. Der kürzeste Weg durch das Medium zwischen Sonde 1 und Behälterwand 16 befindet sich in der Flanschverbindung 19 und zwar zwischen dem Flanschkragen 4 der Sonde und der Flanschfläche 17 der Behälterwand 16. Für diesen Abstand ist in Figur 6 das Maß *d* eingetragen. Die ringförmige Dichtscheibe 8 weist dort, medial von dem Wellenprofil 11 einen Bereich 31 auf, der mit Medium 26 gefüllt ist. Das Medium 26 steht in dem Bereich 31 direkt an der Beschichtung 12 der Dichtscheibe 8 an. Die Geometrie dieses Bereiches 31 ist für die Bestimmung des spezifischen Widerstandes ρ des Mediums relevant.

Zunächst wird der Durchgangswiderstand $R_D$ bestimmt. Nach dem OHM'schen Gesetz gilt

$$R_D = U/I$$

*U* ist die zwischen Sonde 1 und Behälterwand 16 gemessene Spannung und *I* der zwischen Sonde und Behälterwand fließende Strom.

Ggf. kann bei der Bestimmung des Durchgangswiderstandes $R_D$ des Mediums auch der Durchgangswiderstand von Sonde, Messleitung und Behälterwand berücksichtigt werden. Diese sind allerdings vergleichsweise klein und können deswegen auch vernachlässigt werden.

Um aus dem aus Strom und Spannung bestimmten Durchgangswiderstand $R_D$ auf den spezifischen Widerstand ρ zu kommen, wird die folgende Formel angewandt:

$$\rho = R_D * A/d$$

Dabei bezeichnet $R_D$ den Durchgangswiderstand des Mediums, A die Fläche des Bereiches 31, parallel zur Flanschfläche 17 gesehen und *d* den Abstand zwischen Flanschkragen 4 und Flanschfläche 17.

Die Leitfähigkeit des Mediums $\kappa$ ist der Kehrwert des spezifischen Widerstands ρ.

$$\kappa = 1/\rho$$

**Bezugszeichenliste:**

| | |
|---|---|
| 1 | Sonde |
| 2 | Stab |
| 3 | Prallplatte |
| 4 | Flanschkragen |
| 5 | Durchgangslöcher im Flanschkragen |

| | |
|---|---|
| 6 | Sackloch im Flanschkragen (mit Gewinde) |
| 7 | Querbohrung |
| 8 | Dichtscheibe |
| 9 | Durchgangslöcher in der Dichtscheibe |
| 10 | Trägerplatte |
| 11 | Wellenprofil |
| 12 | Beschichtung |
| 13 | Hülse |
| 14 | Kragen |
| 15 | nicht vergeben |
| 16 | Behälterwand |
| 17 | Flanschfläche |
| 18 | Sackloch in Flanschfläche (mit Gewinde) |
| 19 | Flanschverbindung |
| 20 | Bolzen |
| 21 | Federblech |
| 22 | Vorrichtung |
| 23 | Behälter |
| 24 | Messgerät |
| 25 | Potentialausgleich |
| 26 | Medium |
| 27 | Rührorgan |
| 28 | erste Messleitung |
| 29 | zweite Messleitung |
| 30 | Steuerung |
| 31 | Bereich |
| P | Potentialdifferenz des Mediums gegenüber der Behälterwand |
| U | gemessene Spannung |
| n | Drehzahl Antrieb |
| ω | Drehgeschwindigkeit Antrieb |
| v | Bewegungsgeschwindigkeit Medium |
| d | Abstand von Flanschfläche zu Flanschkragen |

**Patentansprüche**

1.  Vorrichtung zum Messen der elektrischen Leitfähigkeit und/oder des elektrischen Potentials eines flüssigen Mediums umfassend:

    a) einen Behälter, welcher dafür bestimmt ist, ein flüssiges Medium aufzunehmen, wobei der Behälter mindestens eine metallische Behälterwand aufweist, welche bei aufgenommenen Medium mit dem Medium in Kontakt steht;
    b) eine metallische Sonde, welche die Behälterwand dergestalt durchsetzt, dass sie mit einem distalen Ende in den Behälter hineinragt und bei aufgenommenen Medium mit diesem in Kontakt steht, wohingegen ein proximales Ende der Sonde außerhalb des Behälters angeordnet ist;
    c) ein Messgerät, welches über Messleitungen mit der Sonde und der Behälterwand verbunden ist und mittels welchem wahlweise das elektrische Potential zwischen der Sonde und der Behälterwand oder die elektrische Leitfähigkeit des Mediums messbar ist;

    **dadurch gekennzeichnet,**
    d) **dass** die Sonde über einen Flansch mit der Behälterwand verbunden ist, wobei der Flansch mindestens eine Isolierung aufweist, welche die Sonde von der Behälterwand elektrisch isoliert und den Flansch gegen Durchtritt des Mediums dichtet.

2.  Vorrichtung nach Anspruch 1, **dadurch gekennzeichnet,**

    a) **dass** der Flansch gebildet wird von einem an der Sonde befestigten, die Sonde umschließenden Flanschkragen und einer in der Behälterwand ausgebildeten Flanschfläche, wobei Flanschkragen und Flanschfläche korrespondierende Lochkreise aufweisen, durch deren Löcher sich Schraubbolzen erstrecken;
    b) **dass** die Isolierung eine Dichtscheibe umfasst, welche zwischen dem Flanschkragen und der Flanschfläche eingelegt ist, wobei die Dichtscheibe einen korrespondierenden Lochkreis aufweist, durch welchen sich die Schraubbolzen erstrecken,
    c) und **dass** die Isolierung eine Mehrzahl von Hülsen umfasst, welche die Schraubbolzen umschließen und diese gegenüber dem Flanschkragen elektrisch isolieren.

3.  Vorrichtung nach Anspruch 1 oder 2, **dadurch gekennzeichnet, dass** die Isolierung zumindest teilweise aus Polyetheretherketon (PEEK) besteht.

4.  Vorrichtung nach Anspruch 2 und 3, **dadurch gekennzeichnet, dass** die Dichtscheibe einen ringförmigen Kern aus Polyetheretherketon (PEEK) umfasst, welcher zu seinem Zentrum hin mit einem Wellenprofil und einer darauf aufgebrachten Beschichtung aus Polytetrafluorethylen (PTFE) versehen ist und/oder dass die Hülsen aus Polyetheretherketon (PEEK) hergestellt sind.

5.  Vorrichtung nach einem der Ansprüche 1 bis 4, **dadurch gekennzeichnet, dass** die Sonde als ein zylindrischer Stab ausgeführt ist, welcher an seinem distalen Ende mit einem ebenen Prallblech versehen ist.

6.  Vorrichtung nach einem der Ansprüche 1 bis 5, **gekennzeichnet durch** einen Antrieb, mittels welchem das in den Behälter eingefüllte Medium in Bewegung versetzbar ist.

7.  Vorrichtung nach Anspruch 6, **dadurch gekennzeichnet, dass** es sich bei dem Antrieb um ein Rührorgan handelt, welches im Behälter angeordnet ist.

8.  Vorrichtung nach Anspruch 6 oder 7, **gekennzeich-**

**net durch** eine Steuerung, welcher ein Grenzwert für das elektrische Potential vorgegeben ist und welche über eine Datenleitung mit dem Messgerät dergestalt verbunden ist, dass das gemessene elektrische Potential der Steuerung übermittelbar ist, wobei die Steuerung dafür eingerichtet ist, eine Erhöhung der Geschwindigkeit des Antriebs auszuschließen, sobald das gemessene elektrische Potential den Grenzwert übersteigt.

9. Vorrichtung nach Anspruch 8, weiter aufweisend eine Inertisierungseinrichtung, mittels welcher der Sauerstoffgehalt im Behälter auf einen Wert reduzierbar ist, der kleiner ist als 75% der nach DIN EN 1839 bei Betriebstemperatur bestimmten Sauerstoffgrenzkonzentration, wobei die Inertisierungseinrichtung dergestalt ausgeführt ist, dass sie einem Sicherheits-Integritätslevel (safety integrity level - SIL) nach DIN EN 61511-1 entspricht, **dadurch gekennzeichnet, dass** der Sicherheits-Integritätslevel der Inertisierungseinrichtung so gering gewählt ist, dass die Sicherheit des Betriebs der Vorrichtung ausschließlich in Anwesenheit der Steuerung gewährleistet ist.

10. Vorrichtung nach einem der Ansprüche 1 bis 9, weiter umfassend ein flüssiges Medium, welches in den Behälter eingefüllt ist und welches sowohl mit der Behälterwand als auch mit der Sonde in Kontakt steht, **dadurch gekennzeichnet, dass** das flüssige Medium im eingefüllten Zustand mindestens eine der folgenden Eigenschaften aufweist:

   • eine elektrische Leitfähigkeit von maximal 10000 pS/m oder maximal 2000 pS/m oder maximal 50 pS/m oder maximal 15 pS/m;
   • einen $pK_s$-Wert kleiner 0;
   • eine Temperatur von 110°C bis 220°C;
   • eine Druckdifferenz zur Umgebung des Behälters von $1*10^5$ Pa bis $40*10^5$ Pa;
   • einen Feststoffgehalt von 0.5 Gew.-% bis 25 Gew.-%;
   • eine nach DIN 53019 bestimmte Viskosität von 50000 mPas bis 150000 mPas.

11. Verfahren zum Messen des elektrischen Potentials eines flüssigen Mediums mit den folgenden Schritten:

   a) Bereitstellen einer Vorrichtung nach einem der Ansprüche 6 bis 9;
   b) Einfüllen eines flüssigen Mediums in den Behälter, sodass das Medium sowohl mit der Behälterwand als auch mit dem distalen Ende der Sonde in Kontakt steht;
   c) Beaufschlagen des Behälters mit Druck und/oder Wärme und/oder Herbeiführen einer chemischen Reaktion innerhalb des Mediums, sodass das Medium mindestens eine der folgenden Eigenschaften aufweist:

      ◦ eine elektrische Leitfähigkeit von maximal 10000 pS/m oder maximal 2000 pS/m oder maximal 50 pS/m oder maximal 15 pS/m;
      ◦ einen $pK_s$-Wert kleiner 0;
      ◦ eine Temperatur von 110°C bis 220°C;
      ◦ eine Druckdifferenz zur Umgebung des Behälters von $1*10^5$ Pa bis $40*10^5$ Pa;
      ◦ einen Feststoffgehalt von 0.5 Gew.-% bis 25 Gew.-%;
      ◦ eine nach DIN 53019 bestimmte Viskosität von 50000 mPas bis 150000 mPas;

   d) Bewegen des Medium innerhalb des Behälters mit Hilfe des Antriebs, sodass das Medium eine Bewegungsgeschwindigkeit gegenüber der Behälterwand erhält;
   e) Messen des elektrischen Potentials zwischen der Sonde und der Behälterwand mit Hilfe des Messgeräts.

12. Verfahren nach Anspruch 11, **dadurch gekennzeichnet, dass** die Bewegungsgeschwindigkeit des Mediums in Abhängigkeit des gemessenen elektrischen Potentials gewählt wird.

13. Verfahren nach Anspruch 12, **dadurch gekennzeichnet, dass** ein Grenzwert für das elektrische Potential festgelegt wird, und dass die Bewegungsgeschwindigkeit des Mediums begrenzt wird, wenn das gemessene elektrische Potential den Grenzwert übersteigt.

14. Verfahren nach Anspruch 13, wobei die Vorrichtung eine Inertisierungseinrichtung aufweist, mittels welcher der Sauerstoffgehalt im Behälter auf einen Wert reduzierbar ist, der kleiner ist als 75% der nach DIN EN 1839 bei Betriebstemperatur bestimmten Sauerstoffgrenzkonzentration, wobei die Inertisierungseinrichtung dergestalt ausgeführt ist, dass sie einem Sicherheits-Integritätslevel (safety integrity level - SIL) nach DIN EN 61511-1 entspricht, **dadurch gekennzeichnet, dass** der Sicherheits-Integritätslevel der Inertisierungseinrichtung so gering gewählt ist, dass die Sicherheit des Betriebs der Vorrichtung ausschließlich unter der Maßgabe gewährleistet ist, dass die Bewegungsgeschwindigkeit des Mediums begrenzt wird, wenn das gemessene elektrische Potential den Grenzwert übersteigt.

15. Verfahren zum Messen der elektrischen Leitfähigkeit eines flüssigen Mediums mit den folgenden Schritten:

   a) Bereitstellen einer Vorrichtung nach einem der Ansprüche 1 bis 5;

b) Einfüllen eines flüssigen Mediums in den Behälter, sodass das Medium sowohl mit der Behälterwand als auch mit dem distalen Ende der Sonde in Kontakt steht;

c) Beaufschlagen des Behälters mit Druck und/oder Wärme und/oder Herbeiführen einer chemischen Reaktion innerhalb des Mediums, sodass das Medium mindestens eine der folgenden Eigenschaften aufweist:

  ◦ einen $pK_s$-Wert kleiner 0;
  ◦ eine Temperatur von 110°C bis 220°C;
  ◦ eine Druckdifferenz zur Umgebung des Behälters von $1*10^5$ Pa bis $40*10^5$ Pa;
  ◦ einen Feststoffgehalt von 0.5 Gew.-% bis 25 Gew.-%;

d) Beaufschlagen der Sonde mit einer elektrischen Prüfspannung;

e) Messen des elektrischen Widerstands zwischen der Sonde und der Behälterwand;

f) Bestimmen der elektrischen Leitfähigkeit des Mediums aus dem Widerstand sowie aus der Geometrie von Sonde und Behälter.

Fig. 1

Fig. 2

Fig. 3

Fig. 4

Fig. 5

Fig. 6

**Europäisches Patentamt**

**European Patent Office**

**Office européen des brevets**

# EUROPÄISCHER RECHERCHENBERICHT

**Nummer der Anmeldung**

EP 19 15 7400

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | JP 2000 193641 A (JAPAN ENERGY CORP) 14. Juli 2000 (2000-07-14) * Absätze [0002], [0004], [0010] - [0012]; Abbildung 1 * ----- | 1-15 | INV. G01N27/06 G01N27/60 |
| Y | US 5 907 112 A (QUEYQUEP CESAR L [US]) 25. Mai 1999 (1999-05-25) * Spalte 3, Zeilen 38-44 * ----- | 1-15 | |
| Y | US 5 994 907 A (MULDER RICHARD [NL] ET AL) 30. November 1999 (1999-11-30) * Spalte 2, Zeilen 8-15; Abbildung 1 * ----- | 1-15 | |
| Y | US 5 391 839 A (LANG HUGO [CH] ET AL) 21. Februar 1995 (1995-02-21) * Anspruch 17; Abbildung 1 * ----- | 1-15 | |
| A | US 5 992 231 A (MULDER RICHARD [NL] ET AL) 30. November 1999 (1999-11-30) * das ganze Dokument * ----- | 1-15 | |

**RECHERCHIERTE SACHGEBIETE (IPC)**

G01N

Der vorliegende Recherchenbericht wurde für alle Patentansprüche erstellt

| Recherchenort | Abschlußdatum der Recherche | Prüfer |
|---|---|---|
| München | 14. August 2019 | Stussi, Elisa |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 15 7400

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-08-2019

| Im Recherchenbericht angeführtes Patentdokument | Datum der Veröffentlichung | Mitglied(er) der Patentfamilie | Datum der Veröffentlichung |
|---|---|---|---|
| JP 2000193641 A | 14-07-2000 | KEINE | |
| US 5907112 A | 25-05-1999 | KEINE | |
| US 5994907 A | 30-11-1999 | NL 9500217 A<br>US 5994907 A<br>WO 9624823 A2 | 02-09-1996<br>30-11-1999<br>15-08-1996 |
| US 5391839 A | 21-02-1995 | CA 2088906 A1<br>DE 4118715 A1<br>DE 59200912 D1<br>EP 0542956 A1<br>ES 2066618 T3<br>JP 2509430 B2<br>JP H05508932 A<br>US 5391839 A<br>WO 9221943 A1 | 08-12-1992<br>10-12-1992<br>19-01-1995<br>26-05-1993<br>01-03-1995<br>19-06-1996<br>09-12-1993<br>21-02-1995<br>10-12-1992 |
| US 5992231 A | 30-11-1999 | CA 2230867 A1<br>DE 19808940 A1<br>NL 1005421 C2<br>US 5992231 A | 03-09-1998<br>08-10-1998<br>18-09-1998<br>30-11-1999 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013109217 A1

**In der Beschreibung aufgeführte Nicht-Patentliteratur**

- Vermeidung von Zündgefahren infolge elektrostatischer Aufladungen. Technische Regeln für Gefahrstoffe (TRGS). GMBI, 2016, vol. 727, 256-314